# EUROPEAN PATENT SPECIFICATION

(11) **EP 4 410 601 B1**
(45) Date of publication and mention of the grant of the patent: **29.04.2026**
(21) Application number: 24155061.5
(22) Date of filing: 31.01.2024
(51) Int. Cl.: B60R 9/06

(54) **CARGO CARRIER ARRANGEMENT FOR VEHICLE**
GEPÄCKTRÄGERANORDNUNG FÜR EIN FAHRZEUG
AGENCEMENT DE SUPPORT DE CHARGEMENT POUR VÉHICULE

(30) Priority: 02.02.2023 SE 2350099
(43) Date of publication of application: 07.08.2024
(73) Proprietor: Jakobs Cargo Carrier AB, 261 47 Landskrona (SE)
(72) Inventor: DIKMEN, Jakob, 261 47 Landskrona (SE)
(74) Representative: Ström & Gulliksson AB

(56) References cited:
- EP-A1- 2 189 333
- DE-A1- 10 351 052
- US-A- 5 460 304
- US-A- 5 775 560
- US-A- 5 862 966
- US-A1- 2006 027 618
- US-A1- 2007 215 565
- US-A1- 2022 017 020

## Description

### TECHNICAL FIELD

The present invention relates in general to vehicle storage accessories, and more precisely, the field of vehicle cargo carriers. In particular, the invention concerns an arrangement for transportation of a cargo carrier, a cargo carrier, a method of transporting the cargo carrier, as well as a kit comprising the cargo carrier and the arrangement for transportation thereof.

### BACKGROUND

It is well known in the art to connect a trailer to a vehicle in order to enable storing and transportation of goods in the trailer. Especially, large, cumbersome goods that are undesirable to bring into the vehicle, as they may damage the vehicle, may not be safe for transportation inside the vehicle, may not fit inside and/or may otherwise damage the vehicle's interior.

A drawback with a common trailer towed on wheels by a vehicle, is that these trailers are often large, expensive and cumbersome to maneuver for the user. Moreover, they require a large storage space when not in use.

WO01/36229A1 discloses a multibag for transporting sport goods, such as golf equipment, which has a tong-arrangement that can be coupled to a pulling hook of a car. A drawback with the multi-bag of WO01/36229A1, is that this arrangement has proven to be unstable, sensitive to load-distributions in the multibag and only suitable for transporting light equipment such a golf equipment for shorter distances and in favorable road conditions, i.e. without wind. It is understood that transporting heavier goods, for instance in unfavorable road conditions, could be dangerous.

As an example, a lot of home owners, especially those living in the country side, need to visit a recycling station on a regular basis in order to be able to recycle garbage, old furniture, gas bottles, gardening and construction trash. According to another example, some users may have a need of transporting gardening equipment, construction equipment, tools or various other implements. These items may be undesirable to bring into the car. Moreover, they may require stable and secure means of transportation, as they can be rather heavy and dangerous equipment to transport.

From the above, it is clear that difficulties arise when it comes to providing stable, load-bearing and low-cost means for transporting goods with a vehicle, being easy to maneuver and load/unload for the user.

The document EP2189333A1 discloses an arrangement for transportation of a cargo carrier according to the preamble of claim 1.

### SUMMARY

An object of the present disclosure is to provide a new type of arrangement for transporting a cargo carrier, as well as a cargo carrier for a vehicle, which is improved over prior art, and which eliminates or at least mitigates the drawbacks related to prior art and/or the drawbacks discussed above.

This object is achieved by means of the technique set forth in the appended independent claims; preferred embodiments being defined in the related dependent claims.

In a first aspect, an arrangement for transportation of a cargo carrier is provided. The arrangement comprises a supporting device releasably connectable to a tow hitch member of a vehicle. The supporting device comprises a foldable main body and at least one supporting member, which is releasably connectable to a mounting means at a base part of the cargo carrier.

Contrary to a common trailer towed on wheels by a vehicle, this arrangement for transportation of a cargo carrier is easy for a user to maneuver alone. Moreover, it is inexpensive to manufacture and does not require a lot of storage space when not in use. The arrangement may further be dismountable into a flat pack. Thus, a collapsible arrangement is provided, that can be purchased as a flat pack, brought home and mounted to a vehicle by a user.

The supporting device is easy to mount to a vehicle, as it only requires to be mounted to one element of the vehicle. Thus, the supporting device can be mounted by a single user. The cargo carrier is in turn also easy to mount to the vehicle by the mounting means of the cargo carrier being releasably connectable to the supporting member of the supporting device. Thus, the cargo carrier can be mounted by a user alone as well.

The supporting device comprises a gripping means releasably connectable to a tow ball of the tow hitch member. The supporting device is easy to mount to a vehicle, as it only requires to be mounted to one element of the vehicle, namely the tow ball of the vehicle. Moreover, many vehicles need not be adapted to be able to hold the cargo carrier since a lot of vehicles are already equipped with a tow ball. The supporting device is mountable and dismountable to the vehicle without the use of any tools.

In an embodiment, the supporting member projects rearwardly from the vehicle when connected to the vehicle. This way, the supporting member of the supporting device can be easily attached to matching mounting means of the cargo carrier.

In an embodiment, the supporting member is lockable to the receiving device, preferably by at least one pin aperture in which a pin is received. By the supporting member of the supporting device being lockable to the receiving device of the cargo carrier, a secure arrangement for transporting the cargo carrier is achieved.

In an embodiment, the supporting member is an elongate console and the receiving device is an elongate tubular member. The tubular member is further configured to slidably receive the elongate console. By the supporting member being an elongate console and the receiving device being an elongate tubular member, the supporting member is slidably received in the elongate console, and a continuous support of the cargo carrier by the supporting device is provided. Thus, the present arrangement is made more stable, less sensitive to poor load-distribution of goods in the cargo carrier and more secure for transporting goods, for instance in poor road conditions.

In an embodiment, the tubular member extends along the base part of the cargo carrier, preferably from a first edge to a second edge of the cargo carrier. Thus, the tubular member extends along the whole length of the base part of the cargo carrier. Since the tubular member receives the elongate console, the cargo carrier is thereby supported along its whole length. The arrangement is thereby made more stable, less sensitive to poor load-distribution of goods in the cargo carrier and more secure for transporting goods.

In an embodiment, the arrangement comprises two supporting members. By providing the supporting device with two supporting members, additional support for the cargo carrier is provided. Additional support of the cargo carrier makes the arrangement more stable, less sensitive to poor load-distribution of goods in the cargo carrier and more secure for transporting goods.

In a second aspect, a cargo carrier is provided, which comprises a base part provided with a mounting means to which the supporting member of the arrangement described above is releasably connectable. The cargo carrier is favourable in that it is dismountable into a flat pack. Thus, a collapsible cargo carrier is provided, that can be purchased as a flat pack, brought home and indirectly mounted to a vehicle by a user, via an arrangement for transporting the cargo carrier as described above.

In an embodiment, the mounting means of the cargo carrier comprises a receiving device which is configured to slidably receive the supporting member of the arrangement for transporting the cargo carrier. This reception of the supporting member in the mounting means contributes to the efficient connection between the supporting device and the cargo carrier.

In an embodiment, the cargo carrier further comprises walls. Preferably, the base part of the cargo carrier, and the walls, are meshed panels. This provides a lightweight structure for the cargo carrier. Furthermore, the load carried in the cargo carrier is easily accessible through the meshed panel structure.

In an embodiment, the cargo carrier further comprises at least one door which provides access to the interior of the cargo carrier. Furthermore, it provides an ergonomic way of loading or unloading the cargo carrier.

In an embodiment, the cargo carrier further comprises wheels. This way, when not mounted to the vehicle, the cargo carrier can be easily moved from one location to another, which is beneficial in terms of simplified loading of the cargo carrier, storing of the cargo carrier when not in use, etc.

In a third aspect, a method of transporting a cargo carrier by means of an arrangement as described above is provided. The method comprises the steps of connecting the supporting device to a tow hitch member of a vehicle, and connecting the cargo carrier to the supporting device by interconnecting at least one supporting member of the supporting device to matching mounting means at the base part of the cargo carrier. Thereby, the supporting device is easy to mount to a vehicle, as it only requires that the supporting device is mounted to a single element of the vehicle. Thereafter, the cargo carrier is in turn mounted to the supporting device.

In a fourth aspect, a kit comprising a cargo carrier and an arrangement for transportation of a cargo carrier, as described above, is provided. By providing a kit with the cargo carrier and the arrangement for transportation of a cargo carrier, it is made easy to purchase and mount a cargo carrier to a vehicle as the kit comprises all necessary means for mounting the cargo carrier to the vehicle. The kit provides low-cost means for transporting goods with a vehicle.

### BRIEF DESCRIPTION OF THE DRAWINGS

By way of example, embodiments of the present invention will now be described with reference to the accompanying drawings, in which:
Fig. 1 is a rear view of a supporting device with two supporting members of an arrangement for transporting a cargo carrier;
Fig. 2 is a rear view of the supporting device of Fig. 1 without supporting members of the arrangement for transporting the cargo carrier;
Fig. 3 is a perspective view of the supporting device with one supporting member of the arrangement for transporting the cargo carrier;
Fig. 4 is a perspective view of the cargo carrier with mountings means at a base part of the cargo carrier;
Fig. 5 is a perspective view of the arrangement for transporting a cargo carrier with the supporting device connected to corresponding mounting means of the cargo carrier;
Fig. 6 is a rear view of the arrangement for transporting a cargo carrier with the supporting device connected to corresponding mounting means of the cargo carrier;
Fig. 7A is a side view of a main body of the supporting device in an unfolded state;
Fig. 7B is a side view of the main body of Fig. 7A but in a folded state;
Fig. 8A is a side view of a folded main body stored on the cargo carrier; and
Fig. 8B is a side view of supporting members of the supporting device, stored on the cargo carrier.

### DETAILED DESCRIPTION OF EMBODIMENTS

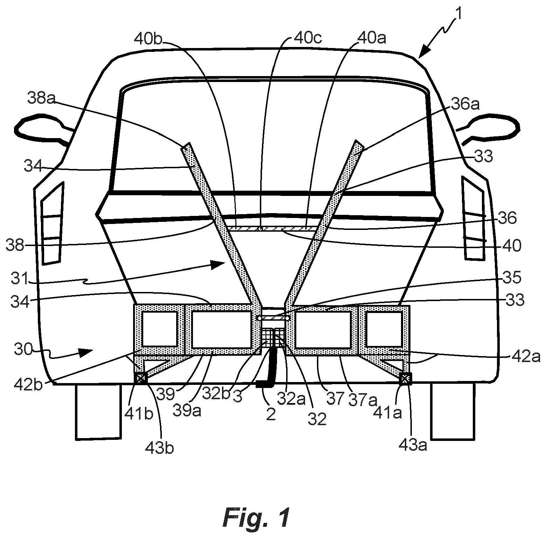

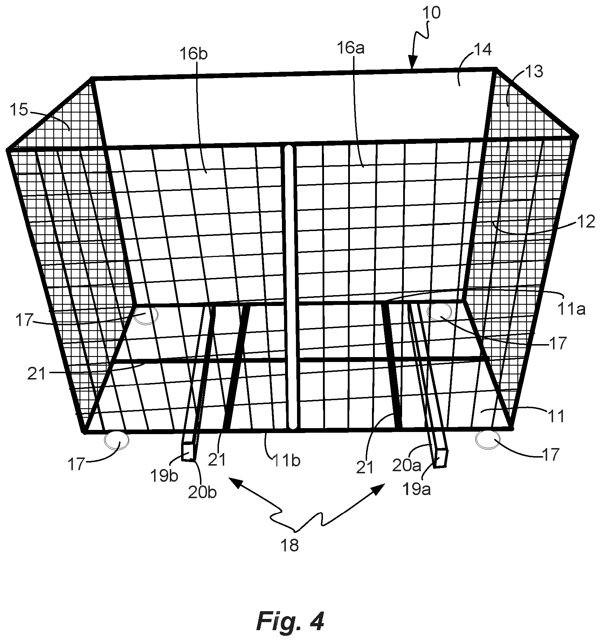

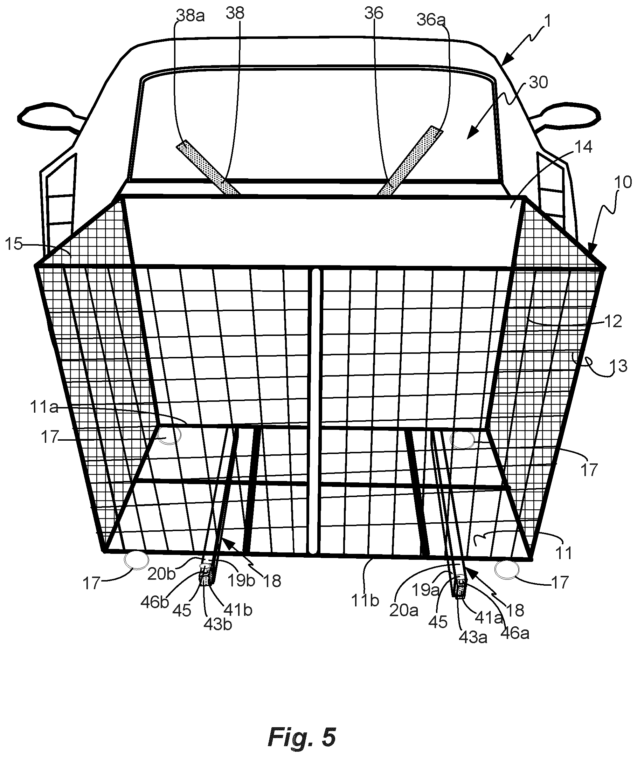

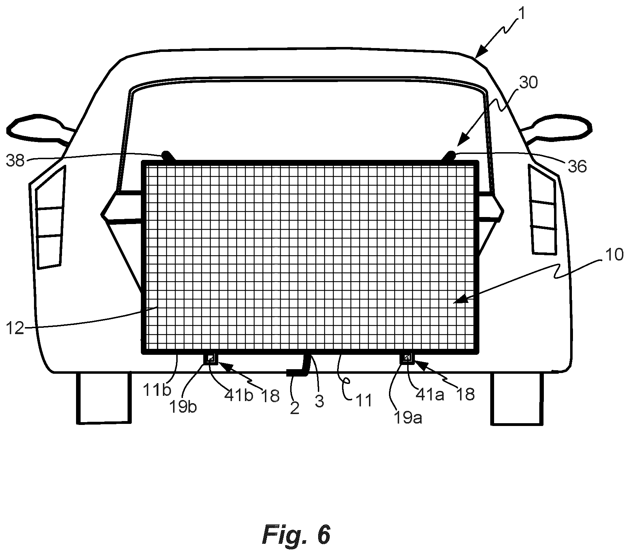

With reference to Figs 1-6, an arrangement for transporting a cargo carrier 10 will be described. The arrangement comprises a supporting device 30, configured to be mounted to a vehicle 1, which will be described with reference to Figs 1-3. Furthermore, a cargo carrier 10 is in turn configured to be mounted to the supporting device 30. In the following, the cargo carrier 10 will be described with reference to Fig. 4. The arrangement including the supporting device 30, and the cargo carrier 10, will be described with reference to Fig. 5 and 6.

Fig. 1 shows a rear side of a vehicle 1 including a rear tow hitch member 2 and a tow ball 3 of the rear tow hitch member 2. The vehicle 1 is shown looking along a longitudinal axis of the vehicle 1. The supporting device 30 of the arrangement for transportation of the cargo carrier is mounted to the rear tow hitch member 2 of the vehicle 1. In particular, the supporting device 30 is mounted to the tow ball 3 of the rear tow hitch member 2. The supporting device 30 comprises a main body 31, which, when mounted to the vehicle 1, is arranged to be substantially perpendicular to the longitudinal axis extending along the length of the vehicle 1. The main body 31 comprises a first frame part 33, a second frame part 34, and gripping means 32 arranged between the first frame part 33 and the second frame part 34. For instance, the first frame part 33 and the second frame part 34 may be linked by the gripping means 32. Moreover, the first frame part 33 and the second frame part 34 may be interconnected by an intermediate element 35. For instance, the first frame part 33 and the second frame part 34 may each pivotally connected to the intermediate element 35. The intermediate element 35 may be a rod.

Furthermore, the first frame part 33 and the second frame part 34 may be arranged substantially parallel to each other.

The gripping means 32 are releasably connected to the rear tow hitch member 2, preferably to the tow ball 3 of the rear tow hitch member 2 of the vehicle 1. The gripping means 32 are configured to fit tightly around the tow ball 3. In Fig. 1, the tow ball 3 is arranged in the gripping means 32 and is therefore not visible. The emplacement of the tow ball 3 in the gripping means 32 is however illustrated in Fig. 1 for sake of clarity.

More specifically, the gripping means 32 comprises a first gripping portion 32a and a second gripping portion 32b configured for gripping the tow ball 3. The first gripping portion 32a and the second gripping portion 32b extend around the tow ball 3, such as to enclose the tow ball 3. The first gripping portion 32a and the second gripping portion 32b are configured to fit tightly around the tow ball 3 to ensure a snuggly fit around the tow ball 3 with no play around (about) the tow ball 3. As an example, the first gripping portion 32a and the second gripping portion 32b may be shaped/formed as substantially half-spherical structures. In other words, the first gripping portion 32a and the second gripping portion 32b, arranged around the tow ball 3, may form a substantially spherical assembly.

For instance, the first gripping portion 32a may be connected to the first frame part 33 and the second gripping portion 32b may be connected to the second frame part 34 of the main body 31 of the supporting device 30. The first frame part 33 comprises a first elongate element, also called first shaft 36, and a first base structure 37. The second frame part 34 comprises a second elongate element, also called second shaft 38, and a second base structure 39. The gripping portion 32a, 32b is connected to each base structure 37, 39, such that the first gripping portion 32a is connected to the first base structure 37 and the second gripping portion 32b is connected to the second base structure 39.

The first base structure 37 unifies the first shaft 36 and the first gripping portion 32a. The second base structure 39 unifies the second shaft 38 and the second gripping portion 32b. By way of example, the first base structure 37, 39, shaft 36, 38 and gripping portions 32a, 32b extend in the same plane, where the plane is substantially perpendicular to the longitudinal axis of the vehicle 1. The first base structure 37 may be fixedly attached to the first shaft 36 and the first gripping portion 32a. Correspondingly, the second base structure 39 may be fixedly attached to the second shaft 38 and the second gripping portion 32b. The first base structure 37 and the first shaft 36 may be provided as one unit. Also the second base structure 39 and the second shaft 38 may be provided as one unit.

When an upper portion 36a of the first shaft 36 and an upper portion 38a of the second shaft 38 are moved towards each other, the first gripping portion 32a and the second gripping portion 32b are moved away from each other. Thus, to ensure a tight fit of the first gripping portion 32a and the second gripping portion 32b on the tow ball 3, a force is to be applied to the first shaft 36 and the second shaft 38. Therefore, a foldable tension member 40, also called tension arm, is arranged to extend between the first shaft 36 and the second shaft 38. In an extended position, the tension member 40 applies a force to (tensions) the first shaft 36 and the second shaft 38, thereby keeping the first shaft 36 and the second shaft 38 away from each other and ensuring a tight fit of the gripping means 32 around the tow ball 3. In a retracted position, the force (tension) applied to the first shaft 36 and the second shaft 38 is released, whereby the first shaft 36 and the second shaft 38 may be brought towards each other, thus enabling to fold the main body 31 of the supporting device 30 into a compact storage position. This may be useful for effective storage of the supporting device 30.

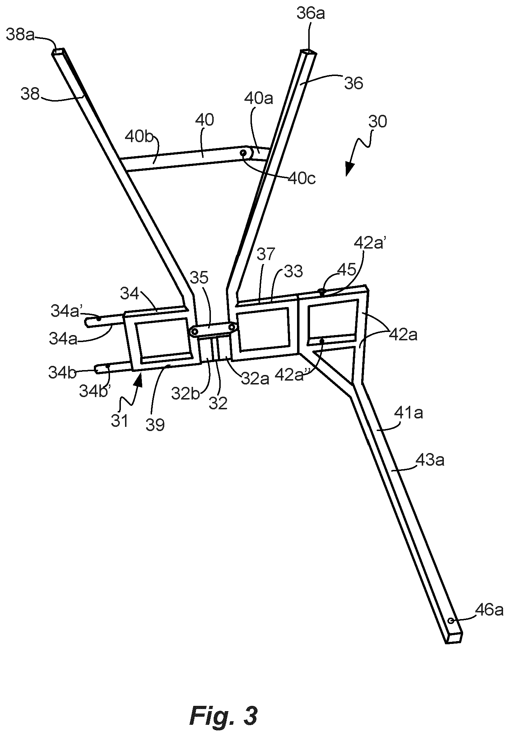

The tension member 40, comprises a first (tension) portion 40a, also called first (tension) rod, and a second (tension) portion 40b, also called second (tension) rod. The first portion 40a and the second portion 40b are pivotally connected to each other, for instance by a pin 40c, arranged between the first portion 40a and the second portion 40b as illustrated in Fig. 1 and 3. Other tensioning mechanisms may be considered for the tension member 40. For instance, the tension member 40 may be referred to as a link system, or link arrangement.

As mentioned, the main body 31 is foldable. In particular, the main body 31 is foldable between the compact storage position mentioned briefly above, and a position of use. More specifically, the main body 31 is foldable via the foldable tension member 40.

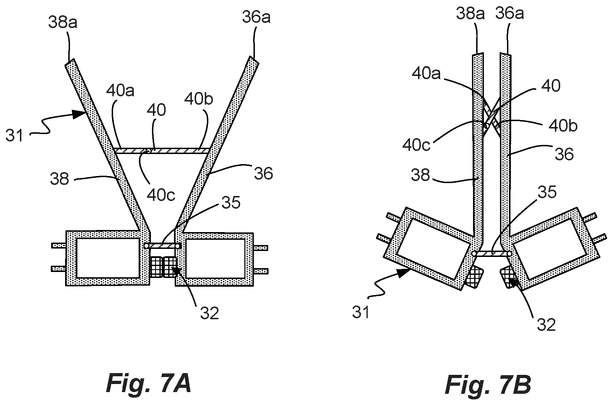

In the storage position, the upper portion 36a of the first shaft 36 and the upper portion 38a of the second shaft 38 of the main body 31 are folded inwards, i.e. pointing towards each other (see Fig. 7B).

In the position of use, when the supporting device 30 is mounted to the vehicle 1, the upper portion 36a of the first shaft 36 and the upper portion 38a of the second shaft 38 of the main body 31 are folded outwards, i.e. pointing away from each other (see Fig. 7A). In this position, the first shaft 36 and the second shaft 38 of the main body 31 are arranged in a substantially V-shaped configuration as depicted in Figs 1-3.

The foldability of the main body 31 contributes to the collapsibility of the supporting device 30. Not only is the arrangement for transportation of a cargo carrier dismountable into a flat pack, but the part referred to as the main body 31 is provided as a part that can be extended *per se* during mounting of the arrangement for transportation of a cargo carrier.

The supporting device 30 provides structural integrity (stability) to the arrangement for transporting a cargo carrier 10. Moreover, the supporting device 30 performs the majority of the work in terms of load-bearing and resistance to deformation when under different loads. According to the embodiment illustrated in Fig. 1, each base structure 37, 39 is configured as a rectangular frame 37a, 39a. This configuration provides additional structural integrity (stability) to the arrangement. The rectangular frame 37a, 39a may be provided with additional load-bearing structures, such as additional load-bearing beams or rods arranged within the rectangular frame 37a, 39a. The base structure 37, 39 could also be provided by another configuration, such as for instance a simple beam or rod. The form of the base structure presented in Fig. 1 should not be considered as limiting for the inventive concept described herein. The base structure could have any shape suitable to provide structural stability and adequate load-bearing capacity.

Further to the above, the supporting device 30 includes a first supporting member 41a and a second supporting member 41b. The purpose of the supporting members 41a, 41b is to support and hold the cargo carrier 10. The supporting members 41a, 41b may have any configuration saw fit for upholding a cargo carrier 10 arranged thereon. For instance, the supporting members 41a, 41b may be provided as elongate supporting members. The first supporting member 41a may further be provided as a first elongate console 43a and the second supporting member 41b may further be provided as a second elongate console 43b. These features will be apparent from Fig. 3. A console can be described as an elongated beam that resists transverse loads applied thereto. Thereby, a console is able to provide support and stability to a structure that it upholds which in this case is a cargo carrier 10.

As can be seen in Fig. 1, the supporting members 41a, 41b are connectable to the supporting device 30. In particular, the supporting members 41a, 41b are releasably connectable to the main body 31 of the supporting device 30. The supporting members 41a, 41b extend at an angle from the supporting device 30. Preferably, the supporting members 41a, 41b are arranged substantially perpendicular to the main body 31. The supporting members 41a, 41b extend substantially parallel to the longitudinal axis of the vehicle 1. When mounted to the vehicle 1, the supporting members 41a, 41b project rearwardly from the vehicle 1, as illustrated by the crosses in Fig. 1. The supporting members 41a, 41b are arranged to be parallel to each other.

As can be seen in Fig. 1, the supporting members 41a, 41b are attached to the frame parts 33, 34 through connection parts 42a, 42b, such that the first supporting member 41a and the first frame part 33 are connected by a first connection part 42a and the second supporting member 41b and the second frame part 34 are connected by a second connection part 42b. In particular, the first supporting member 41a and the first base structure 37 are connected by a first connection part 42a and the second supporting member 41b and the second base structure 39 are connected by a second connection part 42b.

Further, the first and second connection parts 42a, 42b may have any shape saw fit to connect the supporting members 41a, 41b to the main body 31. In particular, the first and second connection parts 42a, 42b form a link between the main body 31 and the supporting members 41a, 41b. The first and second connection parts 42a, 42b have a load-carrying function. Moreover, the first and second connection parts 42a, 42b may have any shape saw fit to provide strength and structural stability to the arrangement for transporting a cargo carrier 10.

The first and second connection parts 42a, 42b may further be configured to provide the supporting members 41a, 41b at a desirable height from the ground when the supporting device 30 is mounted to the tow ball 3 of the vehicle 1. The cargo carrier 10, attached to the supporting members 41a, 41b, should not be in contact with the ground so that easy towing of the cargo carrier 10 is enabled. Thus, it is to be understood that the exact configuration of the supporting members 41a, 41b as shown and described in relation to the drawings, should not be considered as limiting for the inventive concept. Rather, the connection parts 42a, 42b provide a load-bearing and height-adjusting structure connecting the supporting members 41a, 41b and the frame parts 33, 34. As seen in Fig. 1, connection parts 42a, 42b could be provided by rectangular and triangular structures since this configuration provides structural integrity (stability) to the construction. The form of connection parts 42a, 42b should not be considered as limiting for the inventive concept. The structure could have any shape saw fit to provide structural stability and adequate load-bearing capacity.

Preferably, the first supporting member 41a and the first connection parts 42a are provided as a unit and the second supporting member 41b and the second connection part 42b are provided as a unit. The first supporting member 41a and the first connection part 42a are releasably connectable to the first frame part 33.
Likewise, the second supporting member 41b and the second connection part 42b are releasably connectable to the second frame part 34.

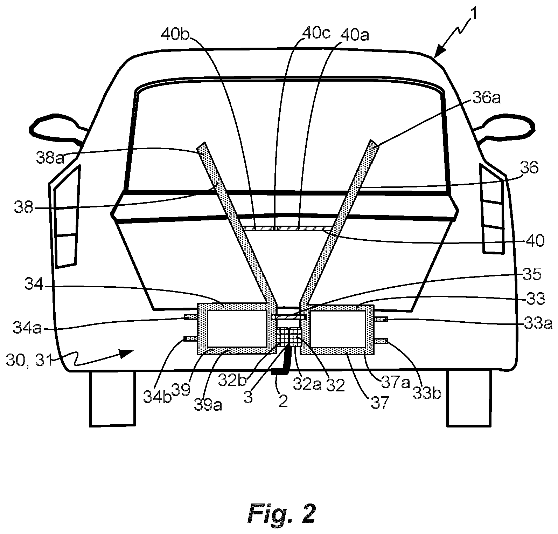

Preferably, the connection parts 42a, 42b are connectable to the frame parts 33, 34 via connection means (see Fig. 2).

Fig. 2 illustrates the main body 31 of the supporting device 30 without the supporting members 41a, 41b mounted thereto. The features described with reference to Fig. 1 apply to Fig. 2 as well. Fig. 2 has been included to show how the main body may look without the supporting members 41a, 41b attached thereto.

With reference to Fig. 2, the connection means provided between supporting members 41a, 41b and the main body 31 will be described. More precisely, the connection means between the connection parts 42a, 42b and the frame parts 33, 34 will be described.

Each frame part 33, 34 comprises two protrusions 33a, 34a each adapted to engage to a corresponding recess (not shown) provided in the connection parts 42a, 42b. The first frame part 33 comprises a first protrusion 33a and a second protrusion 33b, and the second frame part 34 comprises a third protrusion 34a and a fourth protrusion 34b. In Fig. 2, the first base structure 37 comprises the first protrusion 33a and the second protrusion 33b, and the second base structure 39 comprises the third protrusion 34a and the fourth protrusion 34b.

As mentioned above, each protrusion 33a, 33b, 34a, 34b is adapted to mate with a corresponding recess provided in the connection parts 42a, 42b. The protrusions 33a, 33b, 34a, 34b may be slidably insertable into corresponding spaces provided in the connection parts 42a, 42b. Each protrusion 33a, 33b, 34a, 34b is releasably connected to a corresponding recess provided in the connection parts 42a, 42b.

Turning now to Fig. 3, a perspective view of the supporting device 30 with one supporting member 41a attached thereto is illustrated. The features described with reference to Fig. 1 and 2 apply to Fig. 3 as well.

Fig. 3 illustrates the main body 31 of the supporting device 30 with the first frame part 33 and the second frame part 34 joined by the gripping means 32. As previously described, the first gripping portion 32a and the second gripping portion 32b of the gripping means 32 are configured to be fastened to the tow ball 3, the first frame part 33 and the second frame part 34 being pivotally linked by the intermediate element 35. The tension member 40 ensures a tight fit of the first gripping portion 32a and the second gripping portion 32b to the tow ball 3. Furthermore, the tension member 40 contributes to the foldability of the main body 31.

Notably, Fig. 3 shows another view of the supporting members 41a (41b is not illustrated in Fig. 3 but corresponds to supporting member 41a). It should be readily understood that the technical features provided for the first supporting member 41a apply in a corresponding manner for the second supporting member 41b.

As previously mentioned, the purpose of the supporting members 41a, 41b is to support and hold the cargo carrier 10. As can be seen in Fig. 3, the supporting member 41a, 41b extends at an angle from the frame part 33, 34. Preferably, the supporting member 41a, 41b is arranged perpendicularly to the frame part 33, 34. The supporting member 41a, 41b is attached to the frame parts 33, 34 through the connection parts 42a, 42b.

As seen in Fig. 3, the supporting member 41a is provided as an elongate supporting member. The supporting member 41a extends from the main body 31 in a direction being transverse to the longitudinal direction of the main body 31. When mounted to the vehicle, supporting member 41a projects rearwardly from the vehicle 1 as illustrated in Fig. 1.

In Fig. 3, the first supporting member 41a being provided as the first elongate console 43a is apparent. It should be readily understood that the second supporting member 41b may be provided as a second elongate console 43b in a corresponding manner (see Fig. 1).

A pin aperture 46a is provided at a free end of the supporting member 41a shown in Fig. 3. A corresponding pin aperture 46b is provided on the parallel supporting member 41b (not shown in Fig. 3). As will be clear from Fig. 5 below, the supporting members 41a, 41b are lockable to the cargo carrier 10 by introducing pins 45 in these pin apertures 46a, 46b.

On the left hand side of Fig. 3, the connection means provided between supporting members 41a, 41b and the main body 31 are also visible. As previously described, each frame part 33, 34 comprises protrusions 33a, 33b, 34a, 34b, each adapted to engage to a corresponding recess provided in connection parts 42a, 42b.

Each protrusion 33a, 33b, 34a, 34b is lockable to the corresponding recess provided in connection parts 42a, 42b or provided directly in supporting members 41a, 41b. Thereby, each frame part 33, 34 is secured to its corresponding supporting member 41a, 41b. To lock the protrusion 33a, 33b, 34a, 34b to its corresponding recess, the protrusion 33a, 33b, 34a, 34b and connection parts 42a, 42b, comprise pin apertures in which a pin 45, such as a linch pin, is received. The first protrusion 33a comprises a first pin aperture, the second protrusion 33b comprises a second pin aperture, the third protrusion 34a comprises a third pin aperture 34a' and the fourth protrusion 34b comprises a fourth pin aperture 34b'. In Fig. 3, only the third protrusion 34a with the third pin aperture 34a' and the fourth protrusion 34b with the fourth pin aperture 34b' of the second frame part 34 are visible. The first pin aperture and the second pin aperture of the first frame part 33 are covered by the first connection part 42a.

In Fig. 3, the first connection part 42a is shown to have a fifth pin aperture 42a' and a sixth pin aperture 42a". When the first protrusion 33a and the second protrusion 34b are inserted into their corresponding recesses provided in the first connection part 42a, the fifth pin aperture 42a' is superimposed (aligned) with the first pin aperture so that a pin 45 may be used to lock the first frame part 33 to the first supporting member 41a. The sixth pin aperture 42a" is superimposed (aligned) with the second pin aperture so that a second pin (not shown) may be used to lock the first frame part 33 to the first supporting member 41a. The same applies to the second supporting member 41b. When the third protrusion 34a and the fourth protrusion 34b are inserted into their corresponding recesses provided in the first connection part 42a, a pin aperture provided on the second connection part 42b is superimposed (aligned) with the third pin aperture 34a' and another pin aperture provided on the second connection part 42b is superimposed (aligned) with the fourth pin aperture 34b'so that pins 45 may be used to lock the second frame part 34 to the second supporting member 41b.

Locking by pins extending through pin apertures is a simple and effective way of connecting structures of the supporting device 30 and the cargo carrier 10 together.

Fig. 4 is a perspective view of the cargo carrier 10. The cargo carrier 10, also called container or rack, comprises a base part 11 and walls 12-15; a first wall 12, a second wall 13, a third wall 14 and a fourth wall 15. The walls 12-15 make up four upright supporting members connected perpendicularly to the base part 11. The base part 11 may be a rectangular base part. In particular, the base part 11 may be an essentially horizontal floor. The walls 12-15 may be rectangular panels. The cargo carrier 10 may further comprise a lid (not illustrated), which may be arranged on top of the walls 12-15 so that the cargo carrier 10 can be completely closed. Thus, the cargo carrier 10 can be loaded and sealed and without a risk of dropping transported goods, especially when the cargo carrier 10 is transported by the vehicle 1. The lid, like the base part 11, may be a rectangular panel.

The base part 11 and the walls 12-15 may be meshed panels, preferably meshed metal structures bordered by a frame, such as a metal frame. The base part 11 and the walls 12-15 may be provided as panels (having a continuous surface layer). The panels may be wooden panels or metal panels. Furthermore, the panels may be surrounded by a frame, preferably a metal frame. In Fig. 4, only the first wall 12, the second wall 13 and the third wall 14 are shown as meshed structures. The base part 11 and the third wall 14 are shown as panels for the sake of clarity and to not hide other parts of the cargo carrier 10. Moreover, the base part 11 may further be reinforced by ribs 21 provided on the base part 11.

In cases where the base part 11 is made of meshed panels, and where the cargo carrier 10 is loaded with goods that have dimensions smaller than the dimensions of the mesh holes in the base part 11, it may be favourable to provide an element, such as an insert (not shown), at the bottom of the cargo carrier 10, that prevents the goods from passing through the mesh holes in the base part 11 and falling onto the road when the cargo carrier 10 is transported.

Explained differently, such an insert may be arranged at the bottom of the cargo carrier 10, i.e. on the base part 11 of the cargo carrier 10. The insert may be part of the cargo carrier 10. However, the insert is preferably provided as a separate entity. The insert may be shaped as a tray, trough, basket, box, plate or the like. Moreover, the insert may be made of any suitable material that can be cleaned and reused.

The cargo carrier 10 may be provided with at least one door, which provides easy access to the interior of the cargo carrier 10 and makes it easy for a user to load or unload the cargo carrier 10. In Fig. 4, the first wall 12 comprises a first door 16a and a second door 16b, the first door 16a being rotatably attached to the second wall 13 and the second door 16b being rotatably attached to the fourth wall 15.

As illustrated in Fig. 4, the cargo carrier 10 may further be provided as a wheeled cargo carrier 10. This makes it possible to roll the cargo carrier 10 on wheels 17 from one location to another, thus making it easy for a user to engage and disengage the cargo carrier 10 from the vehicle 1 and to move the cargo carrier 10 to a desired location. This avoids heavy lifting. Preferably, the wheels 17 are dismountable from the cargo carrier 10.

The cargo carrier 10 is adapted to be mounted to (loaded on) the supporting device 30 of the arrangement for transportation of the cargo carrier 10. Therefore, the cargo carrier 10 comprises mounting means 18 provided at a base part 11 of the cargo carrier 10. The mounting means 18 are adapted to engage with the supporting device 30 so that the cargo carrier 10 can be mounted to a vehicle 1. Preferably, the mounting means 18 are releasably connectable to the supporting device 30 at the base part 11 of the cargo carrier 10.

As seen in Fig. 4, the mounting means 18 comprises a first receiving device 19a and a second receiving device 19b. The first receiving device 19a is engageable with the first supporting member 41a. The second receiving device 19b is engageable with the second supporting member 41b. More precisely, the first supporting member 41a is insertable in first receiving device 19a and the second supporting member 41b is insertable in second receiving device 19b.

The receiving devices 19a and 19b are provided as elongate tubular members 20a, 20b, such that the first receiving device 19a is provided as a first elongate tubular member 20a and the second receiving device 19b is provided as a second elongate tubular member 20b. The first and second elongate tubular members 20a, 20b have rectangular cross-sections.

The supporting members 41a, 41b may be provided as elongate consoles 43a, 43b, see Fig. 3. The elongate consoles 43a, 43b may also have rectangular cross-sections. Thus, the first supporting member 41a is received within the first elongate tubular member 20a and the second supporting member 41b is received within the second elongate tubular member 20b. It could also be said that each tubular member 20a, 20b is configured to slidably receive its corresponding elongate console 43a, 43b.

It is equally possible to provide the first receiving device 19a and the second receiving device 19b with another shape if saw fit. The first receiving device 19a should be configured to receive the first supporting member 41a and the second first receiving device 19b should be configured to receive the second supporting member 41b.

As can be seen in Fig. 4, the first and second receiving devices 19a, 19b extend under the base part 11. In addition, the first and second receiving devices 19a, 19b may be attached directly to the base part 11. Each receiving device 19a, 19b, being an elongate tubular member 20a, 20b extends, as illustrated in Fig. 4, along the base part 11 of the cargo carrier 10 from a first edge 11a to a second edge 11b of the base part 11. Thus, the elongate tubular member 20a, 20b may extend substantially along the whole length of the base part 11. It is also possible to provide receiving devices 19a, 19b that only extend along a part of the base part 11. The first elongate tubular member 20a and the second elongate tubular member 20b may be arranged essentially parallel to each other. When mounted to the vehicle 1, the first elongate tubular member 20a and the second elongate tubular member 20b project rearwardly from the vehicle 1 in the longitudinal direction of the vehicle 1 as illustrated in Fig. 5.

Fig. 5 is a perspective view of the arrangement for transporting the cargo carrier 10. In particular, Fig. 5 shows the supporting device 30 being mounted to the vehicle 1 and the cargo carrier 10 being connected to the supporting device 30. Most of the supporting device 30 is hidden behind the cargo carrier 10, but upper portions 36a, 38a of shafts 36, 38 and part of the first supporting member 41a and the second supporting member 41b are visible.

As previously mentioned, the cargo carrier 10 comprises the base part 11 and the first wall 12, the second wall 13, the third wall 14 and the fourth wall 15. When the cargo carrier 10 is mounted to the supporting device 30, the first wall 12 is arranged as a rear wall, the third wall 14 is arranged as a front wall and the second wall 13 and the fourth wall 15 are arranged as side walls looking along the longitudinal axis of the vehicle 1 along the vehicle's forward direction of travel.

According to an example, the cargo carrier 10 may have a length of 60 to 200 cm, preferably about 80 to 160 cm, even more preferably about 120 cm. The cargo carrier 10 may have a width of 30 to 100 cm, preferably about 40 to 80 cm, even more preferably about 60 cm. The cargo carrier 10 may have a height of 20 to 200 cm, preferably about 50 to 150 cm, even more preferably about 100 cm.

According to another example, the cargo carrier 10 weighs about 8 to 20 kg, preferably about 10 to 15 kg, even more preferably about 13 kg. The cargo carrier 10 disclosed herein can handle a load of at least 40 kg, preferably a load of about 70 to 80 kg. The relatively low weight of the cargo carrier 10 makes it easy to handle for a user.

Fig. 5 further shows the first receiving device 19a and the second receiving device 19b arranged at the bottom of the base part 11. The first supporting member 41a is arranged in (slidably received in) the first receiving device 19a and the second supporting member 41b is arranged in (slidably received in) the second receiving device 19b. As previously described, the first receiving device 19a, being a first elongate tubular member 20a, is configured to slidably receive the first supporting member 41a, being a first elongate console 43a. Likewise, the second receiving device 19b, being a second elongate tubular member 20b, is configured to slidably receive the second supporting member 41b, being a second elongate console 43b.

The first supporting member 41a is lockable to the first receiving device 19a and the second supporting member 41b is lockable to the second receiving device 19b, preferably by at least one pin aperture 46a, 46b in which a pin 45 is received. By tightly and securely fastening the cargo carrier 10 to the supporting device 30, a secure transport of the cargo carrier 10 by the vehicle 1 can be assured.

As can be seen in Fig. 5, the first and second receiving devices 19a, 19b extend under the base part 11. Each receiving device 19a, 19b may, as illustrated in Fig. 4, extend along the base part 11 of the cargo carrier 10 from the first edge 11a to the second edge 11b of the base part 11. The first edge 11a of the base part 11 is aligned with the third wall 14 and the second edge 11b of the base part 11 is aligned with the first wall 12.

The first supporting member 41a arranged in the first receiving device 19a is longer than the first receiving device 19a, thereby extending beyond the first receiving device 19a. The second supporting member 41b arranged in the second receiving device 19b is longer than the second receiving device 19b, thereby extending beyond the second receiving device 19b. The first supporting member 41a further comprises a first pin hole 46a, also called pin aperture, in which a pin 45, such as a linch pin, is received to lock the first supporting member 41a to the first receiving device 19a. The second supporting member 41b further comprises a second pin hole 46b, in which a pin 45 is received to lock the second supporting member 41b to the second receiving device 19b.

When secured into the respective pin holes 46a, 46b, the pin 45 holds the receiving device 19a, 19b in place, thereby preventing the cargo carrier 10 from detaching from the arrangement for transportation of the cargo carrier 10. This is because the pin 45 blocks the lateral movement of the supporting members 41a, 41b with respect to the receiving devices 19a, 19b.

Optionally, the receiving devices 19a, 19b also include pin holes (not shown), through which the pin 45 can pass through. In that case, the pin 45 would run through both the pin holes 46a, 46b of the supporting members 41a, 41b as well as the receiving devices 19a, 19b of the cargo carrier 10.

Fig. 6 illustrates the arrangement for transporting the cargo carrier 10 where the cargo carrier 10 is connected to the supporting device 30. From Fig. 6, it is clear that the cargo carrier 10 is arranged above the ground when mounted to the supporting device 30. For example, the supporting members 41a, 41b, mounted to the vehicle 1, should preferably be arranged at least 30 cm above the ground.

In use, the cargo carrier 10 - for instance provided on wheels 17 - may be filled with garbage, furniture, gardening or construction equipment, tools or like. When the user has loaded the cargo carrier 10 as he/she pleases, the user may roll (or carry) the cargo carrier 10 to the vehicle 1. The supporting device 30 is connected to the tow hitch member 2 of the vehicle 1. Thereafter, the first supporting member 41a and the second supporting member 41b are attached to the supporting device 30. As described above, the cargo carrier 10 has mounting means 18, provided as the first receiving device 19a and the second receiving device 19b, at the base part 11 of the cargo carrier 10. The cargo carrier 10 is connected to the supporting device 30 by inserting the first supporting member 41a in the matching first receiving device 19a and the second supporting member 41b in the matching second receiving device 19b. The cargo carrier 10 is thereby arranged on (provided on/suspended to) the supporting device 30. As previously described, the supporting members 41a, 41b, arranged in the receiving devices 19a, 19b, are longer than the receiving devices 19a, 19b, thereby extending beyond the receiving devices 19a, 19b. Thereafter, the supporting members 41a, 41b, each comprising a pin hole 46a, 46b (as previously described), are locked to (secured to) the cargo carrier 10, by arranging a pin 45 in each pin hole 46a, 46b (seen in Fig. 5). Next, the vehicle 1 is ready to transport the cargo carrier 10 coupled to the rear of the vehicle 1.

When not in use, the cargo carrier 10 may be released from the supporting device 30 and rolled away from the vehicle 1. The supporting device 30 may in turn be disassembled into a main body 31 and supporting members 41a, 41b that may or may not be interconnected via connection parts 42a, 42b. The main body 31 may be folded to take up less space and, along with the supporting members 41a, 41b, it may be conveniently stowed away until next use. This is illustrated in Figs 7A-8B.

Fig. 7A shows the main body 31 of the supporting device 30 in a position of use. In Fig. 7A, the first and second tension portions 40a, 40b of the tension member 40 extend in the same direction, parallel to each others longitudinal extensions. The upper parts 36a, 38a of the shafts 36, 38 are folded outwards, in a direction away from each other.

Contrarily, Fig. 7B shows the main body 31 in a folded state, namely a compact storage position. In Fig. 7B, the tension portions 40a, 40b of the tension member 40 are inclined with respect to each other and the upper parts 36a, 38a of the shafts 36, 38 are folded inwards, towards each other.

The movement between the position of use represented in Fig. 7A and the compact storage position represented by Fig. 7B is achieved by the pivoting action of the intermediate element 35.

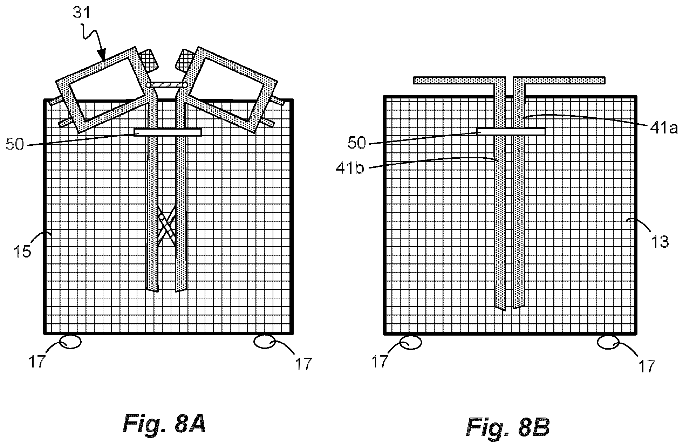

Preferably, the main body 31 and supporting members 41a, 41b are neatly stowed away in pockets or using hooks or similar, that may be provided on walls of the cargo carrier 10. Figs 8A and 8B show examples of such a situation. In Fig. 8A, the main body 31 is clamped to the wall 15 of the cargo carrier 10 by a type of clamping mechanism 50. In Fig. 8B, the two supporting members 41a, 41b are clamped to the opposite wall 13 of the cargo carrier 10 by a corresponding clamping mechanism 50. Advantageously, little space is taken up on the user's driveway as compared to common trailers.

In an aspect, the inventive concept is directed to favourable ways of interconnecting a number of elements and it can be described as an arrangement for transportation of a cargo carrier 10, which comprises a first device 30 configured to be releasably connected to a tow hitch member 2 of a vehicle 1. A second device 18 is provided at a base part 11 of the cargo carrier 10. The first connecting device 30 comprises at least one supporting member 41a, 41b, which is configured to be releasably connected to the second connecting device 19a, 19b, at the base part 11 of the cargo carrier 10.

It is understood from the above that the cargo carrier 10 can be assembled from smaller constituents. For instance, the base 11, the walls 12-15 and the doors 16a, 16b of the cargo carrier 10 are preferably provided as separate parts and may be purchased by a user in a flat pack, along with means for their assembly. Correspondingly, the arrangement for transportation of the cargo carrier 10 may be purchased in a flat pack as well. In particular, the supporting device 30 may be purchased in a form in which the main body 31 is provided as a separate part. Furthermore, the supporting members 41a, 41b may be provided alone or preassembled together with the connection parts 42a, 42b.

## Claims

1. An arrangement for transportation of a cargo carrier (10), the arrangement comprising:
a supporting device (30) comprising a gripping means (32) releasably connectable to a tow ball (3) of a tow hitch member (2) of a vehicle (1), the supporting device (30) comprising a foldable main body (31) and at least one supporting member (41a, 41b);
said supporting member (41a, 41b) being releasably connectable to the main body (31) of the supporting device (30) and to a mounting means (18) at a base part (11) of the cargo carrier (10), whereby
when an upper portion (36a) of a first shaft (36) and an upper portion (38a) of a second shaft (38) of the supporting device (30) are moved towards each other, a first gripping portion (32a) and a second gripping portion (32b) of the gripping means (32) are moved away from each other, and to ensure a tight fit of the first gripping portion (32a) and the second gripping portion (32b) on the tow ball (3), a force is applied to the first shaft (36) and the second shaft (38), and a foldable tension member (40) extends between the first shaft (36) and the second shaft (38), and in an extended position, the tension member (40) applies a force to the first shaft (36) and the second shaft (38), thereby keeping the first shaft (36) and the second shaft (38) away from each other and ensuring a tight fit of the gripping means (32) around the tow ball (3), whereby
the main body (31) of the supporting device (30) further comprises a first frame part (33) and a second frame part (34), the gripping means (32) being arranged between the first frame part (33) and the second frame part (34), **characterized in that** the first frame part (33) comprises a first protrusion (33a) and a second protrusion (33b) and the second frame part (34) comprises a third protrusion (34a) and a fourth protrusion (34b), each protrusion (33a, 33b, 34a, 34b) being adapted to engage to a corresponding recess in a connection part (42a, 42b) of the at least one supporting member (41a, 41b).

2. The arrangement of claim 1, wherein the supporting member (41a, 41b) projects rearwardly from the vehicle (1) when connected to the vehicle (1).

3. The arrangement of any of the preceding claims, wherein the supporting member (41a, 41b) is insertable in a receiving device (19a, 19b) of the mounting means (18).

4. The arrangement of claim 3, wherein the supporting member (41a, 41b) is lockable to the receiving device (19a, 19b), preferably by at least one pin aperture (46a, 46b) in which a pin (45) is received.

5. The arrangement of claims 3 or 4, wherein the supporting member (41a, 41b) is an elongate console (43a, 43b) and the receiving device (19a, 19b) is an elongate tubular member (20a, 20b), and wherein the tubular member (20a, 20b) is configured to slidably receive the elongate console (43a, 43b).

6. The arrangement of claim 5, wherein the tubular member (20a, 20b) extends along the base part (11) of the cargo carrier (10), preferably from a first edge (11a) to a second edge (11b) of the cargo carrier (10).

7. The arrangement of any of the preceding claims, wherein the arrangement comprises two supporting members (41a, 41b).

8. A cargo carrier comprising a base part (11) provided with a mounting means (18) to which the supporting member (41a, 41b) of the arrangement of any one of claims 1-7 is releasably connected.

9. The cargo carrier of claim 8, wherein the mounting means (18) comprises a receiving device (19a, 19b), said receiving device (19a, 19b) being configured to slidably receive the supporting member (41a, 41b) of the arrangement for transporting the cargo carrier (10).

10. The cargo carrier of claims 8 or 9, further comprising walls (12-15), preferably wherein the base part (11) and walls (12-15) are meshed panels.

11. The cargo carrier of any of claims 8-10, further comprising at least one door (16a, 16b).

12. The cargo carrier of any of claims 8-11, further comprising wheels (17).

13. A method of transporting a cargo carrier (10) by means of an arrangement as claimed in any one of claims 1-7, comprising the steps of:
- connecting the supporting device (30) to a tow hitch member (2) of a vehicle (1); and
- connecting the cargo carrier (10) to the supporting device (30) by interconnecting at least one supporting member (41a, 41b) of the supporting device (30) to a matching mounting means (18) at the base part (11) of the cargo carrier (10).

14. A kit comprising a cargo carrier (10) as claimed in any one of claims 8-12 and an arrangement for transportation of a cargo carrier (10), as claimed in any one of claims 1-7.

## Patentansprüche

1. Anordnung zum Transportieren eines Lastenträgers (10), wobei die Anordnung aufweist:
eine Tragvorrichtung (30), die ein Greifmittel (32) aufweist, das lösbar mit einer Anhängekugel (3) eines Anhängerkupplungselements (2) eines Fahrzeugs (1) verbindbar ist, wobei die Tragvorrichtung (30) einen faltbaren Hauptkörper (31) und mindestens ein Tragelement (41a, 41b) aufweist;
wobei das Tragelement (41a, 41b) lösbar mit dem Hauptkörper (31) der Tragvorrichtung (30) und mit einem Befestigungsmittel (18) an einem Basisteil (11) des Lastenträgers (10) verbindbar ist, wobei
wenn ein oberer Abschnitt (36a) eines ersten Schafts (36) und ein oberer Abschnitt (38a) eines zweiten Schafts (38) der Tragvorrichtung (30) aufeinander zu bewegt werden, ein erster Greifabschnitt (32a) und ein zweiter Greifabschnitt (32b) des Greifmittels (32) voneinander weg bewegt werden, und um einen festen Sitz des ersten Greifabschnitts (32a) und des zweiten Greifabschnitts (32b) auf der Anhängekugel (3) zu gewährleisten, eine Kraft auf den ersten Schaft (36) und den zweiten Schaft (38) ausgeübt wird, und ein faltbares Spannelement (40) sich zwischen dem ersten Schaft (36) und dem zweiten Schaft (38) erstreckt, und in einer ausgefahrenen Position das Spannelement (40) eine Kraft auf den ersten Schaft (36) und den zweiten Schaft (38) ausübt, wodurch der erste Schaft (36) und der zweite Schaft (38) voneinander ferngehalten werden und ein fester Sitz des Greifmittels (32) um die Anhängekugel (3) gewährleistet wird, wobei
der Hauptkörper (31) der Tragvorrichtung (30) ferner ein erstes Rahmenteil (33) und ein zweites Rahmenteil (34) aufweist, wobei das Greifmittel (32) zwischen dem ersten Rahmenteil (33) und dem zweiten Rahmenteil (34) angeordnet ist, **dadurch gekennzeichnet dass** das erste Rahmenteil (33) einen ersten Vorsprung (33a) und einen zweiten Vorsprung (33b) aufweist und das zweite Rahmenteil (34) einen dritten Vorsprung (34a) und einen vierten Vorsprung (34b) aufweist, wobei jeder Vorsprung (33a, 33b, 34a, 34b) dazu ausgebildet ist, in eine entsprechende Aussparung in einem Verbindungsteil (42a, 42b) des mindestens einen Tragelements (41a, 41b) einzugreifen.

2. Anordnung nach Anspruch 1, wobei das Tragelement (41a, 41b) von dem Fahrzeug (1) nach hinten hervorragt, wenn es mit dem Fahrzeug (1) verbunden ist.

3. Anordnung nach einem der vorhergehenden Ansprüche, wobei das Tragelement (41a, 41b) in eine Aufnahmevorrichtung (19a, 19b) des Befestigungsmittels (18) einführbar ist.

4. Anordnung nach Anspruch 3, wobei das Tragelement (41a, 41b) an der Aufnahmevorrichtung (19a, 19b) verriegelbar ist, vorzugsweise durch mindestens eine Stiftöffnung (46a, 46b), in der ein Stift (45) aufgenommen ist.

5. Anordnung nach Anspruch 3 oder 4, wobei das Tragelement (41a, 41b) eine längliche Konsole (43a, 43b) ist und die Aufnahmevorrichtung (19a, 19b) ein längliches rohrförmiges Element (20a, 20b) ist, und wobei das rohrförmige Element (20a, 20b) dazu ausgebildet ist, die längliche Konsole (43a, 43b) verschiebbar aufzunehmen.

6. Anordnung nach Anspruch 5, wobei sich das rohrförmige Element (20a, 20b) entlang des Basisteils (11) des Lastenträgers (10) erstreckt, vorzugsweise von einer ersten Kante (11a) zu einer zweiten Kante (11b) des Lastenträgers (10).

7. Anordnung nach einem der vorhergehenden Ansprüche, wobei die Anordnung zwei Tragelemente (41a, 41b) aufweist.

8. Lastenträger, der ein Basisteil (11) aufweist, das mit einem Befestigungsmittel (18) versehen ist, mit dem das Tragelement (41a, 41b) der Anordnung nach einem der Ansprüche 1-7 lösbar verbunden ist.

9. Lastenträger nach Anspruch 8, wobei das Befestigungsmittel (18) eine Aufnahmevorrichtung (19a, 19b) aufweist, wobei die Aufnahmevorrichtung (19a, 19b) dazu ausgebildet ist, das Tragelement (41a, 41b) der Anordnung zum Transportieren des Lastenträgers (10) verschiebbar aufzunehmen.

10. Lastenträger nach Anspruch 8 oder 9, der ferner Wände (12-15) aufweist, wobei vorzugsweise das Basisteil (11) und die Wände (12-15) Gitterplatten sind.

11. Lastenträger nach einem der Ansprüche 8-10, der ferner mindestens eine Tür (16a, 16b) aufweist.

12. Lastenträger nach einem der Ansprüche 8-11, der ferner Räder (17) aufweist.

13. Verfahren zum Transportieren eines Lastenträgers (10) mittels einer Anordnung nach einem der Ansprüche 1-7, das die Schritte aufweist:
- Verbinden der Tragvorrichtung (30) mit einem Anhängerkupplungselement (2) eines Fahrzeugs (1); und
- Verbinden des Lastenträgers (10) mit der Tragvorrichtung (30) durch Verbinden von mindestens einem Tragelement (41a, 41b) der Tragvorrichtung (30) mit einem passenden Befestigungsmittel (18) am Basisteil (11) des Lastenträgers (10).

14. Bausatz, aufweisend einen Lastenträger (10) nach einem der Ansprüche 8-12 und eine Anordnung zum Transportieren eines Lastenträgers (10) nach einem der Ansprüche 1-7.

## Revendications

1. Agencement de transport d'un transporteur de marchandises (10), l'agencement comprenant :
un dispositif de support (30) comprenant un moyen de préhension (32) pouvant être raccordé de manière amovible à une boule de remorquage (3) d'un organe d'attache-remorque (2) d'un véhicule (1), le dispositif de support (30) comprenant un corps principal pliable (31) et au moins un organe de support (41a, 41b) ;
ledit organe de support (41a, 41b) pouvant être raccordé de manière amovible au corps principal (31) du dispositif de support (30) et à un moyen de montage (18) au niveau d'une partie de base (11) du transporteur de marchandises (10), de sorte que
lorsqu'une portion supérieure (36a) d'un premier arbre (36) et une portion supérieure (38a) d'un second arbre (38) du dispositif de support (30) sont déplacées l'une vers l'autre, une première portion de préhension (32a) et une seconde portion de préhension (32b) du moyen de préhension (32) sont éloignées l'une de l'autre, et pour assurer un ajustement serré de la première portion de préhension (32a) et de la seconde portion de préhension (32b) sur la boule de remorquage (3), une force est appliquée au premier arbre (36) et au second arbre (38), et un organe de tension pliable (40) s'étend entre le premier arbre (36) et le second arbre (38), et dans une position étendue, l'organe de tension (40) applique une force sur le premier arbre (36) et le second arbre (38), maintenant ainsi le premier arbre (36) et le second arbre (38) éloignés l'un de l'autre et assurant un ajustement serré du moyen de préhension (32) autour de la boule de remorquage (3), de sorte que
le corps principal (31) du dispositif de support (30) comprend en outre une première partie de cadre (33) et une seconde partie de cadre (34), le moyen de préhension (32) étant agencé entre la première partie de cadre (33) et la seconde partie de cadre (34), **caractérisé en ce que** la première partie de cadre (33) comprend une première saillie (33a) et une deuxième saillie (33b) et la seconde partie de cadre (34) comprend une troisième saillie (34a) et une quatrième saillie (34b), chaque saillie (33a, 33b, 34a, 34b) étant adaptée pour venir en prise dans un évidement correspondant dans une partie de raccord (42a, 42b) dudit au moins un organe de support (41a, 41b).

2. Agencement selon la revendication 1, dans lequel l'organe de support (41a, 41b) fait saillie vers l'arrière à partir du véhicule (1) lorsqu'il est raccordé au véhicule (1).

3. Agencement selon l'une quelconque des revendications précédentes, dans lequel l'organe de support (41a, 41b) peut être inséré dans un dispositif de réception (19a, 19b) du moyen de montage (18).

4. Agencement selon la revendication 3, dans lequel l'organe de support (41a, 41b) peut être verrouillé au dispositif de réception (19a, 19b), de préférence par au moins une ouverture de goupille (46a, 46b) dans lequel est reçue une goupille (45).

5. Agencement selon les revendications 3 ou 4, dans lequel l'organe de support (41a, 41b) est une console allongée (43a, 43b) et le dispositif de réception (19a, 19b) est un organe tubulaire allongé (20a, 20b), et dans lequel l'organe tubulaire (20a, 20b) est configuré pour recevoir de manière coulissante la console allongée (43a, 43b).

6. Agencement selon la revendication 5, dans lequel l'organe tubulaire (20a, 20b) s'étend le long de la partie de base (11) du transporteur de marchandises (10), de préférence d'un premier bord (11a) à un second bord (11b) du transporteur de marchandises (10).

7. Agencement selon l'une quelconque des revendications précédentes, dans lequel l'agencement comprend deux organes de support (41a, 41b).

8. Transporteur de marchandises comprenant une partie de base (11) munie d'un moyen de montage (18) auquel l'organe de support (41a, 41b) de l'agencement selon l'une quelconque des revendications 1 à 7 est raccordé de manière amovible.

9. Transporteur de marchandises selon la revendication 8, dans lequel le moyen de montage (18) comprend un dispositif de réception (19a, 19b), ledit dispositif de réception (19a, 19b) étant configuré pour recevoir de manière coulissante l'organe de support (41a, 41b) de l'agencement de transport du transporteur de marchandises (10).

10. Transporteur de marchandises selon les revendications 8 ou 9, comprenant en outre des parois (12-15), de préférence dans lequel la partie de base (11) et les parois (12-15) sont des panneaux maillés.

11. Transporteur de marchandises selon l'une quelconque des revendications 8 à 10, comprenant en outre au moins une porte (16a, 16b).

12. Transporteur de marchandises selon l'une quelconque des revendications 8 à 11, comprenant en outre des roues (17).

13. Procédé de transport d'un transporteur de marchandises (10) au moyen d'un agencement selon l'une quelconque des revendications 1 à 7, comprenant les étapes consistant à :
- raccorder le dispositif de support (30) à un organe d'attache-remorque (2) d'un véhicule (1) ; et
- raccorder le transporteur de marchandises (10) au dispositif de support (30) en interconnectant au moins un organe de support (41a, 41b) du dispositif de support (30) à un moyen de montage (18) jumelé au niveau de la partie de base (11) du transporteur de marchandises (10).

14. Kit comprenant un transporteur de marchandises (10) selon l'une quelconque des revendications 8 à 12 et un agencement de transport d'un transporteur de marchandises (10) selon l'une quelconque des revendications 1 à 7.
